# NEUE EUROPÄISCHE PATENTSCHRIFT

(11) **EP 0 700 421 B2**
(45) Veröffentlichungstag und Bekanntmachung des Hinweises auf die Entscheidung über den Einspruch: **05.11.2003**
(45) Hinweis auf die Patenterteilung: 24.03.1999
(21) Anmeldenummer: 94915038.7
(22) Anmeldetag: 12.05.1994
(51) Int. Cl.: C09C 1/62, C09C 1/66, C09C 1/64, C09D 17/00

(54) **VERFAHREN ZUR HERSTELLUNG EINER METALLPIGMENTDISPERSION ZUR VERWENDUNG IN EINEM LACK ODER EINER FARBE UND DADURCH ERHALTENE METALLPIGMENTDISPERSION**
PREPARATION PROCESS OF A METAL PIGMENT DISPERSION FOR USE IN A LACQUER OR A PAINT AND METAL PIGMENT DISPERSION OBTAINED THEREBY
PROCEDE DE PREPARATION D'UNE DISPERSION DE PIGMENTS METALLIQUES DESTINEE A ETRE UTILISEE DANS UNE LAQUE OU UNE PEINTURE ET DISPERSION DE PIGMENTS METALLIQUES OBTENUE DE CETTE MANIERE

(30) Priorität: 26.05.1993 DE 4317463
(43) Veröffentlichungstag der Anmeldung: 13.03.1996
(73) Patentinhaber: ECKART-WERKE STANDARD BRONZEPULVER-WERKE CARL ECKART GMBH & CO., D-90763 Fürth (DE)
(72) Erfinder: APPLEYARD, Colin, D-90556 Fürth-Hiltmannsdorf (DE); SOMMER, Günter, D-91207 Lauf (DE)
(74) Vertreter: LOUIS- PÖHLAU- LOHRENTZ
(86) Internationale Anmeldenummer: DE9400570
(87) Internationale Veröffentlichungsnummer: WO94028074

(56) Entgegenhaltungen:
- EP-A- 0 134 676
- CH-A- 412 158
- FR-A- 2 335 466
- FR-A- 2 354 300
- US-A- 3 244 542
- US-A- 4 011 361
- US-A- 5 045 114
- US-A- 5 156 677
- Tensid-Taschenbuch; Carl Hanser Verlag; 1979; Seiten 140-141, 146-147.
- Römpp Chemie Lexikon; 9. Auflage; Georg Thieme Verlag, Seite 3567.
- Römpp Chemie Lexikon; 9. Auflage; Georg Thieme Verlag, 1992, S. 3567, 3573
- Ullmanns Enzyklopädie der technischen Chemie, Band 14, 1963, S. 222
- H. Wagner et al. "Lackkunstharze", C. Hanser Verlag, 1971, S. 211-212
- Römpp Lexikon Lacke und Druckfarben, G. Thieme Verlag, 1998. S. 177
- The Printing Ink Manual, 5th ed., Blueprint, 1993, S. 228-250
- JOT + Oberfläche, Nr.6, 1994, "PVDF-Lacke für Fassadenelemente"
- Elf Atochem Technische Information "Kynar 500", Februar 1992

## Beschreibung

Die Erfindung betrifft ein Verfahren zur Herstellung einer Metallpigmentdispersion zur Verwendung in einem Lack oder einer Farbe, insbesondere Druckfarbe. Farben und Lacke, die blättchenförmige Metallpigmente enthalten, haben ein sehr breites Anwendungsgebiet. Sie werden in der Lackindustrie als sogenannte Metallic-Farben für die Lackierung von Automobilen, Maschinen und dergleichen verwendet. In der Druckfarbenindustrie werden sie zur Herstellung von Druckfarben für Metallic- und Effektdruck, aber auch zum flächigen Beschichten von Verpackungs-materialien im Wege von Druckverfahren verwendet, um damit das materialaufwendige Kaschieren mit Metallfolie zu ersetzen. Dies gilt insbesondere füe die Verpackung von Nahrungsund Genußmittel.

Die Herstellung von Metallpigmenten erfolgt, gleichgültig für welchen Verwendungszweck, indem Grieß, Flitter oder grobe Pigmente in mehreren Schritten bis zur gewünschten Feinheit oder Teilchengröße gemahlen werden. So werden beispielsweise Aluminium, Goldbronze, Kupfer oder Zinkdurch Mahlen in einer Kugelmühle in Gegenwart harter, runder Mahlkörper oder durch Stampfen zerkleinert. Der Mahlvorgang kann naß, wie zum Beispiel bei Aluminium in Gegenwart von Testbenzin, oder trocken, wie zum Beispiel bei Goldbronze oder Kupfer, durchgeführt werden.

Beim Naßmahlverfahren wird die aus der Kugelmühle erhaltene Suspension auf einer Filterpresse abgepreßt, wobei ein Filterkuchen, beispielsweise bei Aluminium, mit einem Lösemittelgehalt von ca. 20% entsteht. Dieser Filterkuchen muß für die Verwendung in vielen Lacken und Druckfarben zu Pulver getrocknet und häufig mit anderen Lösemitteln emeut zu einer Paste angeteigt werden.

Metallpigmente haben eine Blättchenstruktur mit einem Formfaktor (Verhältnis von Durchmesser zu Dicke) von 10-500. Erst diese Teilchenform ermöglicht aufgrund des Reflexionsverhaltens einen metallischen Silber- oder Goldeffekt. Beim Vermahlen von Grieß, Flitter oder groben Pigmenten als Ausgangsmaterial entstehen ständig neue Oberflächen. Deshalb ist es bei der Zerkleinerung erforderlich, ein sogenanntes Mahlhilfsmittel ("Schmiermittel") zuzusetzen. Durch die Belegung der Metallpigmentoberfläche mit Schmiermittel sowie eine Reaktion zwischen Metallpigmentoberfläche und Schmiermittel, z.B. in Form einer Metallseifenbildung, wird ein Kaltverschweißen und damit eine erhebliche Beeinträchtigung des optischen Effektes der Metallpartikel vermieden. Als Mahlhilfsmittel werden üblicherweise Fettsäuren oder deren Derivate, bei Aluminium vorzugsweise Stearin- und Ölsäure und bei Goldbronze und Kupfervorzugsweise Stearinsäure, verwendet. Mit diesen Mahlhilfsmitteln wird außerdem die Steuerung der "leafing"-und "non-leafing"- Eigenschaften der Pigmente erreicht, die wiederum entscheidend für die Optik und die Haftung der Pigmente sind.

Bei der Vermahlung von Metallpigmenten unter Zusatz von Fettsäuren oder deren Derivate entstehen in Gegenwart von Luftsauerstoff neben den Metallseifen auch unerwünschte Fettsäureabbauprodukte, vor allem organische Aldehyde und Säuren, die an der Oberfläche der Metallpigmente haften und mit herkömmlichen Verfahren nicht entfernt werden können. Darüberhinaus besitzen die so hergestellten Metallpigmente durch die oben erwähnten Abbauprodukte, zum Beispiel kann Buttersäure entstehen, einen typischen unangenehmen Geruch, der auch auf dem Endprodukt erhalten bleibt. Gerade wenn diese Metallpigmente im Lebensmittelbereich eingesetzt werden sollen, ist dies aus sensorischen Gründen nicht akzeptabel.

Bei der Naßvermahlung von Aluminium in Gegenwart von Testbenzin als Mahlmedium und einem Mahlhilfsmittel, wie z.B. Ölsäure, führt zudem die Notwendigkeit, das Testbenzin zu entfernen, zu weiteren Nachteilen. Diese bestehen insbesondere darin, daß Kondensations- und Destillationsabfälle anfallen sowie die Entsorgung der Abfallschlämme sichergestellt werden muß, die bei der Wiederaufbereitung der Lösemittel entstehen. Für die Verwendung in Druckfarben ist der nach dem Naßmahlverfahren gewonnene Filterkuchen aufgrund des enthaltenen Testbenzins nur bedingt geeignet, so daß dieser unter zusätzlichem Aufwand und häufig unter gleichzeitiger Verschlechterung der Pigmentqualität zu Pulver getrocknet werden und dann oft mit einem anderen Lösemittel wieder zu einer Paste angeteigt werden muß. Die auch bei gründlicher Trocknung dem Pigment anhaftenden Reste von Testbenzin machen die Anwendung als Druckfarbe häufig sogar unmöglich, da sie bei der Applikation nicht nur einen unangenehmen Geruch verursachen, sondern auch die Anwendungseigenschaften negativ beeinflussen können.

Es ist aus der US-PS 33 89 105 ein Mahlverfahren bekannt, bei dem Metallpigmente in Gegenwart von Fluorkohlenwasserstoffharzen und einem Mahlhilfsmittel, wie zum Beispiel Stearinsäure, vermahlen werden. Dieses Mahlverfahren kann sowohl trocken als auch naß durchgeführt werden. Bei diesem Verfahren wird ein mit dem Fluorkohlenwasserstoffharz beschichtetes Metallpulver erhalten, welches aus Umweltschutzgründen problematisch ist.

Aus der US-PS 50 45 114 ist ein ähnliches Verfahren bekannt, bei dem mit Stearinsäure gecoatete Aluminiumpigmente mit einem thermoplastischen Harz oder einem warmaushärtenden Harz als Bindemittel vermahlen werden. Als Bindemittel wird ein Material verwendet, das bei erhöhten Temperaturen leicht fließend ist und das dann zu einer endgültigen, glatten, gleichmäßigen Form aushärtet (Warmaushärtung) oder erstarrt (thermoplastisch). Dieses Aluminiumpigment wird als Pulverlack verwendet und erfordert somit eine spezielle Applikationstechnik.

Weiterhin ist aus der FR-A-26 62 702 ein Verfahren bekannt, bei dem man ein "geruchsfreies" Metallpigment dadurch erhält, daß das Pigment naß vermahlen und anschließend in einen thermoplastischen Kunststoff eingeschmolzen wird. Ein vollständiges Einkapseln der Metallpigmente kann bei diesem Verfahren nicht sichergestellt werden. Darüberhinaus verdunstet bei diesem aufwendigen Prozeß bei erhöhter Temperatur jedoch nur ein Teil der riechenden Schmiermittelbestandteile.

In der CH-A-412 158 ist ein Verfahren zur Herstellung einer Aluminiumpigment-Dispersion zur Verwendung für Lacke oder Farben beschrieben, bei dem ein Aluminiumgranulat in einem Kugelmahlwerk in Gegenwart eines flüssigen Ethylenoxyd-Propylenoxyd-Polymers mit einem Molekulargewicht zwischen 1500 und 2000 sowie in Gegenwart von Testbenzin zu blättchenförmigen Aluminiumpigmenten ausgemahlen wird. Der Mahlvorgang erfolgt in Abwesenheit der bei anderen bekannten Mahlverfahren verwendeten Stearinsäure, die üblicherweise als Mahlhilfsmittel eingesetzt wird. Das verwendete Testbenzin wird nach dem Mahlvorgang möglichst weitgehend entfernt. Danach wird die so erhaltene Aluminiumpigmentdispersion durch Hinzufügen üblicher Bindemittel und sonstiger Additive zu Lack oder Farbe verarbeitet.

Weiterhin ist in der EP-A- 134 676 ein Verfahren zur Herstellung einer Metallpigmentpaste beschrieben, bei dem zunächst aus Metallgranulat in Gegenwart einer organischen Flüssigkeit, vorzugsweise Testbenzin, blättchenförmige Metallpigmente in einem Kugelmahlwerk ausgemahlen werden, und anschließend daran die solchermaßen erhaltene Dispersion mit einem organischen Bindemittel gemischt wird, das gegebenenfalls die gleiche organische Flüssigkeit wie die Metallpigmentdispersion enthält. Anschließend an das Mischen der beiden Komponenten wird das Gemisch durch weitgehendes Entfemen der organischen Flüssigkeit zu einer festen, in Pellets oder Granulat ausarbeitbaren Paste eingedickt. Durch dieses Vorgehen sollen bei der Handhabung des Metallpigments dessen durch den staubförmigen Zustand bestehende Nachteile vermieden werden.

Schließlich ist aus der US-A-51 56 677 ein Verfahren zur Modifikation der metallischen Oberfläche von Metallpigmenten bekannt, bei dem eine die Modifikation bewirkende Verbindung bereits bei dem Mahlvorgang für die Metallpigmente zugegeben werden kann. Der Mahlvorgang findet jedoch mit den üblichen Mahlhilfsmitteln, z.B. Stearin- und Ölsäure, und in Gegenwart von geeigneten Lösungsmitteln, vorzugsweise Testbenzin, statt. Durch die Oberflächenmodifikation der Metallpigmentteilchen ist das Metallpigment besonders für wässrige Bindemittel geeignet, die anschließend an den Mahlvorgang der Metallpigmentdispersion zur Herstellung von Metalliclacken zugesetzt werden. Auch mit diesem bekannten Verfahren sind die vorstehend bereits geschilderten Nachteile nicht zu vermeiden, die durch die Entstehung von Fettsäuren-Reaktionsprodukten und die Beseitigung des Testbenzins auftreten.

Ausgehend von diesem bekannten Stand der Technik und den damit verbundenen Nachteilen ist es Aufgabe der vorliegenden Erfindung, eine Metallpigmentdispersion bereitzustellen, die nach der Anwendung keine störenden Gerüche aufweist. Weiterhin soll ein einfach auszuführendes Verfahren bereitgestellt erden, mit dem es gelingt, unerwünschte Reste des Schmiermittels sowie unerwünschte chemische Verbindungen des Schmiermittels mit dem Metallpigment zu vermeiden, um dadurch eine größere Freiheit bei der Verarbeitung der Dispersionen zu schaffen, wobei auch der beim Naßvermahlen bisher übliche Einsatz von Testbenzin vermieden werden kann. Aus der DE-OS 42 23 384 ist zwar ein Verfahren bekannt, mit dem der Gehalt von konventionellen Schmiermitteln reduziert werden kann. Dieses Verfahren ist aber sehr aufwendig, eine vollständige Entfernung des Schmiermittels ist nicht möglich, und die so hergestellten Metallpigmente weisen nach wie vor den typischen bekannten Geruch auf, während das erfindungsgemäße Verfahren einfach und erfolgreich durchgeführt werden kann. Mit Hilfe des erfindungsgemäßen Verfahrens sollen außerdem blättchenförmige Metallpigmente bereitgestellt werden, die eine verbesserte Haftung und damit eine bessere Kaschier- und Laminierfähigkeit aufweisen.

Erfindungsgemäß wird diese Aufgabe gelöst durch das Verfahren gemäß Anspruch 1 bzw. die Metallpigmentdispersion gemäß Anspruch 6.

Es hat sich überraschenderweise gezeigt, daß eine große Anzahl der herkömmlicherweise in Farben und Lacken als Bindemittel verwendeten Materialien die Funktion des Mahlhilfsmittels übernehmen können. Diese Bindemittel können aus der Gruppe, bestehend aus Alkyd-, Polyester-, Polyvinylchlorid-Harzen, Polyacrylaten, Polymethacrylaten, Polystyrolen, Polyolefinen, Cumaron-Inden-, Kohlenwasserstoff-, Keton-Aldehyd-, Aromaten-Formaldehyd- Harzen Cellulosederivaten, Polyurethanen ausgewählt werden. Alle diese Bindemittel, die bei der Herstellung von Farben und Lacken mit dem Metallpigment oder dem Metallpigmentvorprodukt vermischt werden, um die fertigen Farben oder den fertigen Lack zu ergeben, erfüllen einerseits die Funktion eines Schmiermittels, da bei Verwendung dieser Bindemittel eine Oberflächenreaktion zwischen den reaktiven Seitengruppen der Bindemittel und dem Metallpigment erfolgen kann, andererseits treten jedoch keine unerwünschten, riechenden Abbauprodukte auf. Somit läßt sich das Kaltverschweißen der Metallpigmente beim Mahlvorgang vermeiden, und die Explosionsgefahr bei der Herstellung der Aluminiumpigmente kann ohne Einsatz von Testbenzin oder dergleichen verhindert werden. Als Lösemittel eignen sich Alkohole, Ester, aromatenhaltige, aromatenfreie, rein aromatische hochsiedende Mineralöle und Wasser. Durch den Einsatz von Bindemittel oder Bindemittel lösung bei der Vermahlung entsteht aus dem Herstellungsvorgang für die Metallpigmente bereits die fertige Metallpigmentdispersion, der vor dem Einsatz (Drucken, Lackieren) weitere Zusatzmittel, wie zum Beispiel Weichmacher, weiteres Lösemittel und gegebenenfalls weitere Additive zugegeben werden können. Als Weichmacher können Produkte auf der Basis von Phthalsäure, Adipinund Sebacinsäure, Phosphorsäure und chlorierten Produkten verwendet werden. Als weitere Additive können Emulgatoren, Antiabsetzmittel, Antischaummittel, Gleitmittel, Netzmittel, Haftverbesserungsmittel, Wachse, wie zum Beispiel PE-Amid, PTFE-, PP-Wachse verwendet werden. Die Wahl des entsprechenden Bindemittels oder der Bindemittel lösung als Mahlhilfsmittel und gegebenenfalls weiterer Additive kann somit schon beim Herstellungsverfahren auf den späteren Verwendungszweck der Metallpigmentdispersion abgestellt werden, wodurch das Herstellungsverfahren und die spätere Verwendung deutlich vereinfacht werden. Das Bindemittel kann ein nichtflüchtiger Bestandteil des Lackes oder der Farbe sein.

Das Herstellungsverfahren der Metallpigmentdispersion gemäß der Erfindung erfolgt vorzugsweise derart, daß das Mahlverfahren in einem Kugelmahlwerk durchgeführt wird, in dem das Metallpigment aus einem feinen Grieß, Flitter oder groben Pigmenten mit einer Korngröße von weniger als 30 µm in Anwesenheit von wenigstens einem der oben genannten Bindemittel, das die Funktion des Mahlhilfsmittels mit übernimmt, und gegebenenfalls einem der oben genannten Lösemittel gemahlen wird. Der Anteil von Bindemittellösung in der Metallpigmentdispersion beträgt 20 bis 90 Gew.-%, wobei dies deutlich über dem Anteil des als Mahlhilfsmittel üblicherweise zugesetzten Schmiermittels, der 1 bis 7 Gew.-% beträgt, liegt.

Die so hergestellte Metallpigmentdispersion weist keine Reaktions- oder Abbauprodukte von Fettsäuren auf, die aus der Reaktion mit dem Metallpigment entstehen und an der Oberfläche des Metallpigments haften. Die Endprodukte weisen nach Wegschlagen und Abdunsten der Lösemittel keine störenden Gerüche, die die Sensorik beeinflussen könnten, auf, und die Farben und Anstriche zeigen eine ausgezeichnete Haftung.

Aus der DE-PS 41 35 095 ist zwar ein Verfahren, insbesondere für die Herstellung von extrem kleinen Metallpulvem, bekannt, bei dem die Metallpulver mittels Metalloxidkügelchen vermahlen werden, wobei der Mahlvorgang in derjenigen Flüssigkeit durchgeführt werden kann, in der die Metallpartikel suspendiert werden sollen. Aufgrund des unterschiedlichen Einsatzgebietes und insbesondere der Größe (nm-Bereich im Vergleich zum bei Metallpigmenten üblichen µm-Bereich) und Beschaffenheit der Metallpartikel erscheint eine Übertragung des bekannten Verfahrens auf die Erzeugung von Metallpigmentdispersionen der vorliegenden Art nicht naheliegend.

Als Metallpigmente eignen sich Aluminium; Kupfer, Zink oder eine Legierung aus diesen Metallen. Die Metallpigmentdispersion enthält 10 bis 80 Gew.-% Metallpigment und 90 bis 20 Gew.% Bindemittellösung. Eine Aluminiumpigment enthaltende Metallpigmentdispersion besteht aus 10 bis 60 Gew.-%, vorzugsweise 40 bis 60 Gew.-% Aluminiumpigment und 90 bis 40 Gew.-%, vorzugsweise 60 bis 40 Gew.-% Bindemittellösung. Eine aus einer Cu/Zn-Legierung bestehendes Goldbronzepigment oder Kupferpigment enthaltende Metallpigmentdispersion besteht aus 20 bis 70 Gew.-%, vorzugsweise 40 bis 60 Gew.-% Goldbronze- oder Kupferpigment und 80 bis 30 Gew.-%, vorzugsweise 60 bis 40 Gew.-% Bindemittellösung. Eine Zinkpigment enthaltende Metallpigmentdispersion besteht aus 10 bis 80 Gew.-%, vorzugsweise 40 bis 60 Gew.-% Zinkpigment und 90 bis 20 Gew.-%, vorzugsweise 60 bis 40 Gew.-% Bindemittellösung.

Die vorliegende Erfindung wird nun im folgenden anhand von Beispielen näher erläutert.

Die in den Beispielen aufgeführten Komponenten werden in ein Kugelmahlwerk gegeben und bis zum Erreichen der gewünschten Feinheit des Metallpigments gemahlen.

Hierdurch wird jeweils ein Farbkonzentrat erhalten, das vor dem Verdrucken durch Verdünnen mit einem geeigneten Lösemittel auf die erforderliche Viskosität eingestellt werden muß.

### Nichterlindungsgemäßes Beispiel 1

70 Gew.-% Messinggrieß (ca. 90 % Kupfer, ca. 10 % Zink, weniger als 1 % Aluminium) <30 µm 7,5 Gew.-% Polyvinylbutyral (vertrieben unter der Marke Pioloform® BL 18 von der Firma Wacker, Burghausen)
18 Gew.-% Ethanol
4,5 Gew.-% Ethylacetat

Die aus den angegebenen Komponenten erhältliche Farbe zeigt im Rakelabzug einen guten metallischen Effekt. Dieser Abzug ist nach dem Wegschlagen und Abdunsten der Lösemittel geruchsfrei.

### Beispiel 2

17 Gew.-% Aluminiumgrieß <30 µm
16 Gew.-% 70%ige Kollodiumwolle AH27 (vertrieben von der Firma Hagedom, Osnabrück)
53 Gew.-% Ethanol
14 Gew.-% Ethylacetat

Die aus diesen Komponenten erhältliche Farbe zeigt im Rakelabzug einen guten metallischen Effekt. Dieser Abzug ist nach Wegschlagen und Abdunsten der Lösemittel geruchsfrei.

### Nichterlindumgsgemäßes Beispiel 3

40 Gew.-% Messinggrieß (ca. 85 % Kupfer, ca. 15 % Zink, weniger als 1 % Aluminium) <30 µm 15 Gew.-% Polyvinylbutyral (vertrieben unter der Marke Pioloform® BL 18 von der Firma Wacker, Burghausen)
36 Gew.-% Ethanol
9 Gew.-% Ethylacetat

Die aus den angegebenen Komponenten erhältliche Farbe zeigt im Rakelabzug einen guten metallischen Effekt. Dieser Abzug ist nach Wegschlagen und Abdunsten des Lösemittel geruchsfrei.

### Beispiel 4

40 Gew.-% Messinggrieß (ca. 70 % Kupfer, ca. 30 % Zink, weniger als 1 % Aluminium) <30 µm 50 Gew.-% wäßrige Acrylharzdispersion mit 35 % Feststoffgehalt (vertrieben unter der Marke Zinpol® 146 von der Firma Zinchem, Somerset, N.J., USA) 10 Gew.-% Wasser

Die aus den angegebenen Komponenten erhältliche Farbe zeigt im Rakelabzug einen guten metallischen Effekt. Dieser Abzug ist nach Wegschlagen und Abdunsten des Lösemittels geruchsfrei.

## Patentansprüche

1. Verfahren zur Herstellung einer Metallpigmentdispersion zur Verwendung in einem Lack oder einer Farbe, insbesondere Druckfarbe, bei dem das Metallpigment aus einem Metallgrieß oder Metallgranulat in Anwesenheit von wenigstens einem Bindemittel oder einer Bindemittellösung für den genannten Lack bzw. die genannte Farbe, jedoch in Abwesenheit von Fettsäuren oder Fettsäurederivaten, insbesondere Stearin- oder Ölsäure, in einem Kugelmahlwerk ermahlen wird, wobei das als Mahlhilfsmittel dienende Bindemittel aus Alkyd-, Polyester-, Polyvinylchlorid-Harzen, Polyacrylaten, Polymethacrylaten, Polystyrolen, Polyolefinen, Cumaron-Inden-, Kohlenwasserstoff-, Keton-, Aldehyd-, Aromaten-Formaldehyd-Harzen, Cellulose-derivaten, Polyurethanen ausgewählt ist.

2. Verfahren nach Anspruch 1,
**dadurch gekennzeichnet,**
**daß** der Metallgrieß eine Korngröße von weniger als 30 um aufweist.

3. Verfahren nach Anspruch 1 oder 2,
**dadurch gekennzeichnet,**
**daß** der Anteil an Bindemittellösung in der Metallpigmentdispersion 90 - 20 Gew.-% beträgt.

4. Verfahren nach einem der Ansprüche 1 bis 3,
**dadurch gekennzeichnet,**
**daß** als Lösemittel für die Bindemittellösung beim Mahlen zumindest teilweise ein in dem Lack oder der Farbe verwendetes Lösemittel eingesetzt wird.

5. Verfahren nach einem der Ansprüche 1 bis 4,
**dadurch gekennzeichnet,**
**daß** das oder mehrere Lösemittel der Bindemittellösung aus der Gruppe bestehend aus Alkoholen, Estem oder aromatenhaltigen, aromatenfreien, rein aromatischen hochsiedenden Mineralölen sowie Wasser ausgewählt ist bzw. sind.

6. Metallpigmentdispersion zur Verwendung in einem Lack oder einer Farbe, insbesondere Druckfarbe,
**dadurch gekennzeichnet,**
**daß** sie durch das Verfahren gemäß einem der Ansprüche 1 bis 5 erhältlich ist, wobei das oder mehrere Bindemittel aus Alkyd-, Polyester-, Polyvinylchlorid-Harzen, Polyacrylaten, Polymethacrylaten, Polystyrolen, Polyolefinen, Curnaron-inden-, Kohlenwasserstoff-, Keton-, Aldehyd-, Aromaten-Formaldehyd-Harzen, Cellulosederivaten, Polyurethanen ausgewählt ist bzw. sind und daß sie kein Testbenzin enthält.

7. Metallpigmentdispersion nach Anspruch 6,
**dadurch gekennzeichnet,**
**daß** das Metallpigment Aluminium, Kupfer, Zink oder eine Legierung dieser Metalle ist.

8. Metallpigmentdispersion nach einem der Ansprüche 6 bis 7,
**dadurch gekennzeichnet,**
**daß** das oder mehrere Lösemittel für die Bindemittellösung aus der Gruppe bestehend aus Alkoholen, Estem, aromatenhaltigen, aromatenfreien, rein aromatischen hochsiedenden Mineralölen sowie Wasser ausgewählt ist bzw. sind.

9. Metallpigmentdispersion nach einem der Ansprüche 6 bis 8,
**dadurch gekennzeichnet,**
**daß** sie 10 - 60 Gew.-%, vorzugsweise 40 - 60 Gew.-%, Aluminiumpigment und 90 - 40 Gew.-%, vorzugsweise 60 - 40 Gew.-%, Sindemittellösung enthält.

10. Metallpigmentdispersion nach einem der Ansprüche 6 bis 8,
**dadurch gekennzeichnet,**
**daß** sie 20 - 70 Gew.-%, vorzugsweise 40 - 60 Gew.-%, aus einer Cu/Zn-Legierung bestehendes Goldbronzepigment oder Kupferpigment und 80 - 30 Gew.-%, vorzugsweise 60 - 40. Gew.-%, Bindemittellösung enthält.

11. Metallpigmentdispersion nach einem der Ansprüche 6 bis 8.
**dadurch gekennzeichnet,**
**daß** sie 10 - 80 Gew.-%, vorzugsweise 40-60 Gew.-%, Zinkpigment, und 90-20 Gew.-%, vorzugsweise 60 - 40 Gew.-%, Bindemittellösung enthält.

12. Metallpigmentdispersion nach einem der Ansprüche 6 bis 11,
**dadurch gekennzeichnet,**
**daß** das Bindemittel ein nichtflüchtiger Bestandteil des Lackes oder der Farbe ist

13. Verwendung der Metallpigmentdispersion nach einem der Ansprüche 6 bis 12 zur Herstellung von Lacken und Farben, insbesondere Druckfarben.

## Claims

1. Process for preparing a metal pigment dispersion for use in a paint or an ink, especially a printing ink, wherein the metal pigment is obtained by grinding from a coarse metal powder or metal granules in a ball mill in the presence of at least one binder or binder solution for the said paint or ink but in the absence of fatty acids or fatty acid derivatives, especially stearic acid or oleic acid, whereby the binder which is used as a grinding aid is selected from alkyd, polyester and polyvinyl chloride resins, polyacrylates, polymethacrylates, polystyrols, polyolefins, indene-coumarone, hydrocarbon, ketone, aldehyde and aromatic-formaldehyde resins, cellulose derivatives and polyurethanes.

2. Process according to Claim 1, **characterised in that** the coarse metal powder has a particle size of less than 30 µm.

3. Process according to Claim 1 or 2, **characterised in that** the proportion of binder solution in the metal pigment dispersion is 90-20% by weight.

4. Process according to one of Claims 1 to 3, **characterised in that** the solvent employed for the binder solution at the grinding stage consists at least partially of a solvent used in the paint or ink.

5. Process according to one of Claims 1 to 4, **characterised in that** the solvent or solvents of the binder solution is or are selected from the group consisting of alcohols, esters, high-boiling mineral oils which contain aromatic compounds, are free from aromatic compounds or are purely aromatic, and water.

6. Metal pigment dispersion for use in a paint or ink, especially a printing ink, **characterised in that** it is obtainable by the process according to one of Claims 1 to 5, whereby the binder or binders is or are selected from alkyd, polyester and polyvinyl chloride resins, polyacrylates, polymethacrylates, polystyrols, polyolefins, indene-coumarone, hydrocarbon, ketone, aldehyde and aromatic-formaldehyde resins, cellulose derivatives and polyurethanes, and that it contains no white spirit.

7. Metal pigment dispersion according to Claim 6, **characterised in that** the metal pigment is aluminium, copper, zinc or an alloy of these metals.

8. Metal pigment dispersion according to one of Claims 6 to 7, **characterised in that** the solvent or solvents for the binder solution is or are selected from the group consisting of alcohols, esters, high-boiling mineral oils, which contain aromatic compounds, are free from aromatic compounds or are purely aromatic, and water.

9. Metal pigment dispersion according to one of Claims 6 to 8, **characterised in that** it comprises 10-60% by weight, preferably 40-60% by weight, of aluminium pigment and 90-40% by weight, preferably 60-40% by weight, of binder solution.

10. Metal pigment dispersion according to one of Claims 6 to 8, **characterised in that** it comprises 20 to 70% by weight, preferably 40-60% by weight, of a copper pigment or gold bronze pigment consisting of a Cu/Zn alloy and 80-30% by weight, preferably 60-40% by weight, of binder solution.

11. Metal pigment dispersion according to one of Claims 6 to 8, **characterised in that** it comprises 10-80% by weight, preferably 40-60% by weight, of zinc pigment and 90-20% by weight, preferably 60-40% by weight, of binder solution.

12. Metal pigment dispersion according to one of Claims 6 to 11, **characterised in that** the binder is a nonvolatile constituent of the paint or ink.

13. Use of the metal pigment dispersion according to one of Claims 6 to 12 for preparing paints and inks, especially printing inks.

## Revendications

1. Procédé pour la préparation d'une dispersion de pigments métalliques destinée à être utilisée dans une laque ou une matière colorante, en particulier une matière colorante pour l'imprimerie, dans lequel le pigment métallique est obtenu par broyage, dans un broyeur à billes, d'un granulé ou granulat métallique en présence d'au moins un agent de liaison ou d'une solution de liaison pour ladite laque ou ladite matière colorante, mais en l'absence d'acides gras ou de dérivés d'acides gras, en particulier d'acide stéarique ou d'acide oléique, l'agent de liaison servant d'agent adjuvant de broyage étant choisi entre les résines alkydes, polyesters, polyvinyliques, polychlorures de vinyle, les polyacrylates, les ployméthacrylates, les polystyrènes, les polyoléfines, les résines de coumarone-indène, les résines de polyhydrocarbures, cétoniques, aldéhydiques, aromatiques-formaldéhydes, les dérivés cellulosiques et les polyuréthanes.

2. Procédé selon la revendication 1, **caractérisé en ce que** le granulé métallique présente une grosseur de grain de moins de 30 µm.

3. Procédé selon la revendication 1 ou 2, **caractérisé en ce que** la proportion de la solution de liaison dans la dispersion de pigments métalliques représente 90 à 20% en poids.

4. Procédé selon l'une des revendications 1 à 3, **caractérisé en ce que**, en tant qu'agent solvant dans la solution de liaison au cours du broyage, on introduit au moins partiellement un agent solvant utilisé dans la laque ou dans la matière colorante.

5. Procédé selon l'une des revendications 1 à 4, **caractérisé en ce que** l'un ou plusieurs des agents solvants de la solution de liaison est, ou sont, choisi dans le groupe constitué par les alcools, les esters ou les huiles minérales à haut point d'ébullition purement aromatiques, comportant des constituants aromatiques ou exemptes de constituants aromatiques ainsi que de l'eau.

6. Dispersion de pigments métalliques destinée à être utilisée dans une laque ou un colorant, en particulier un colorant pour l'impression, **caractérisée en ce qu'**elle est obtenue par le procédé selon l'une des revendications 1 à 5, le ou plusieurs des agents de liaison étant choisi(s) entre les résines alkydes, polyesters, polyvinyliques, poly-chlorure de vinyle, les polyacrylates, les polyméthacrylates, les polystyrènes, les polyoléfines, les résines de coumarone-indène, de polyhydrocarbures, cétoniques, aldéhydiques et de formaldéhyde aromatiques, les dérivés cellulosiques et les polyuréthanes, et **en ce qu'**elle ne contient pas de benzine d'essai.

7. Dispersion de pigments métalliques selon la revendication 6 ou 7, **caractérisée en ce que** le pigment métallique consiste en aluminium, cuivre, zinc, ou un alliage de ces métaux.

8. Dispersion de pigments métalliques selon l'une des revendications 6 et 7, **caractérisée en ce que** le, ou plusieurs des agents solvants de la solution de liaison est choisi dans le groupe constitué par les alcools, les esters, les huiles minérales à haut point d'ébullition purement aromatiques comportant des constituants aromatiques ou exemptes de constituants aromatiques.

9. Dispersion de pigments métalliques selon l'une des revendications 6 à 8, **caractérisée en ce qu'**elle contient 10-60% en poids, et de préférence 40-60% en poids de pigment d'aluminium, et 90-40% en poids, et de préférence 60-40% en poids de solution de liaison.

10. Dispersion de pigments métalliques selon l'une des revendications 6 à 8, **caractérisée en ce qu'**elle contient 20-70% en poids, et de préférence 40-60% en poids d'un alliage Cu / Zn se composant de pigment de bronze doré ou de pigment de cuivre et de 80-30% en poids et de préférence 60-40% en poids de solution de liaison.

11. Dispersion de pigments métalliques selon l'une des revendications 6 à 8, **caractérisée en ce qu'**elle contient 10-80% en poids, et de préférence 40-60% en poids de pigment de zinc et 90-20% en poids, et de préférence 60-40% en poids de solution de liaison.

12. Dispersion de pigments métalliques selon l'une des revendications 6 à 11, **caractérisée en ce que** la solution de liaison est un constituant non volatil de la laque ou du colorant

13. Application de la dispersion de pigments métalliques selon l'une des revendications 6 à 12 pour la préparation de laques ou de matières colorantes, en particulier de colorants à imprimerie.
